# EUROPEAN PATENT APPLICATION

(11) **EP 4 592 868 A1**
(43) Date of publication of application: **30.07.2025**
(21) Application number: 23867203.4
(22) Date of filing: 22.08.2023
(51) Int. Cl.: G06F 16/638, G06F 16/635

(54) **SONG LIST RECOMMENDATION METHOD AND APPARATUS, DEVICE, STORAGE MEDIUM AND PROGRAM PRODUCT**

(30) Priority: 19.09.2022 CN 202211140628
(71) Applicant: Beijing Zitiao Network Technology Co., Ltd., Beijing 100190 (CN)
(72) Inventor: DU, Cong, Beijing 100028 (CN); CHEN, Tianyang, Beijing 100028 (CN); QIU, Zhonghao, Beijing 100028 (CN); XIA, Kai, Beijing 100028 (CN); CHEN, Ling, Beijing 100028 (CN)
(74) Representative: Dentons UK and Middle East LLP
(86) International application number: PCT/CN2023/114314
(87) International publication number: WO 2024/060910

(57) **Abstract**

Embodiments of the present disclosure provide a method, apparatus, electronic device, storage medium, computer program product and computer program for playlist recommendation. The method comprises: determining a target song for recommending to a target user and at least one playlist associated with the target song; playing the target song on a first interface for the target user, wherein the first interface comprises a first display area and a second display area, and the first display area and the second display area are distributed at different positions on the first interface; and displaying association information of the target song in the first display area with association information of the target playlist and a first list of play lists corresponding to the target playlist being displayed in the second display area. The first list of play lists is displayed with association information of the first predetermined number of songs. The target playlist is any playlist of the at least one playlist. According to the embodiments of the present disclosure, more satisfactory songs can be quickly and accurately recommended to the user, and more satisfactory playlist is recommended to the user. The operational steps are simple and convenient, and the user experience is improved.

## Description

### CROSS-REFERENCING

The present application claims priority to Chinese Patent Application No. 202211140628.2, filed on September 19, 2022, entitled "METHOD, APPARATUS, DEVICE, STORAGE MEDIUM AND PROGRAM PRODUCT FOR PLAYLIST RECOMMENDATION", the entirety of which is incorporated herein by reference.

### FIELD

Embodiments of the present disclosure relate to the technical field of interface interaction, in particular to a method, apparatus, electronic device, storage medium, computer program product and computer program for playlist recommendation.

### BACKGROUND

At present, the existing method for playlist recommendation is randomly recommending a song or playlist to a user and playing, or inputting a search instruction through a user, and then looking, based on the search instruction input by the user, in a song library for a song or playlist matched with the search instruction.

However, in the prior art, only songs or playlists may be recommended, which has limitations. Moreover, the way of random recommendations is often not preferred by the user, and the recommended accuracy is low. The way of recommending songs through user search is preferred by users. However, every time the user listens to a song, they need to search the song library for one pass. Operational steps are tedious. The songs are searched from the massive song library in real time, resulting in a slow response speed and longer search time.

Therefore, in the prior art, a satisfactory song cannot be quickly and accurately recommended to a user, and a satisfactory playlist cannot be recommended to the user. The operational steps are tedious, and the user experience is reduced.

### SUMMARY

The embodiments of the present disclosure provide a method, apparatus, electronic device, storage medium, computer program product and computer program for playlist recommendation, which can quickly and accurately recommend a satisfactory song for a user, recommend a satisfactory playlist for the user, and are simple and convenient to operate and improve the user experience.

In a first aspect, the embodiments of the present disclosure provide a method of playlist recommendation including: determining a target song for recommending to a target user and at least one playlist associated with the target song, playing the target song on a first interface for the target user, wherein the first interface comprises a first display area and a second display area, and the first display area and the second display area are distributed at different positions on the first interface; and displaying association information of the target song in the first display area with association information of the target playlist and a first list of play lists corresponding to the target playlist being displayed in the second display area. The first list of playlistss is displayed with association information of the first predetermined number of songs. The target playlist is any playlist of the at least one playlist.

**In** a second aspect, the embodiments of the present disclosure provide an apparatus for playlist recommendation including: a recommendation module configured to determine a target song for recommending to a target user and at least one playlist associated with the target song; a play module configured to play the target song on a first interface for the target user, wherein the first interface comprises a first display area and a second display area, and the first display area and the second display area are distributed at different positions on the first interface; and a display module configured to display association information of the target song in the first display area with association information of the target playlist and a first list of play lists corresponding to the target playlist being displayed in the second display area. The first list of playlists is displayed with association information of the first predetermined number of songs. The target playlist is any playlist of the at least one playlist.

**In** a third aspect, the embodiments of the present disclosure provide an electronic device, including: at least one processor, and a memory. The memory stores computer executable instructions. The at least one processor executes the computer executable instructions stored in the memory, to enable the at least one processor to perform the method of playlist recommendation according to the first aspect.

In a fourth aspect, the embodiments of the present disclosure provide a computer readable storage medium having stored computer executable instructions that, when executed by a processor, implement a method of playlist recommendation according to the first aspect.

In a fifth aspect, the embodiments of the present disclosure provide a computer program product including a computer program which, when executed by a processor, implements the method of playlist recommendation according to the first aspect.

**In** a sixth aspect, the embodiments of the present disclosure provide a computer program which, when executed by a processor, implements the method of playlist recommendation according to the first aspect.

According to the method, apparatus, electronic device, storage medium and program product for playlist recommendation provided by the embodiments of the present disclosure, a target song for recommending to a target user and at least one playlist associated with the target song is determined. The target song is played on a first interface for the target user. The first interface herein includes a first display area and a second display area, and the first display area and the second display area are distributed at different positions on the first interface. Then, association information of the target song is displayed in the first display area, meanwhile, association information of the target playlist and a first list of play lists corresponding to the target playlist are displayed in the second display area. The first list of play lists is displayed with association information of the first predetermined number of songs. The target playlist is any playlist of the at least one playlist. Therefore, in the embodiments of the present disclosure, at least one playlist to be recommended associated with the target song is determined while at least one playlist to be recommended associated with the target song is determined. The playlist of the preference associated with the song is recommended to the user while the song is recommended. The song is displayed on the same interface and played, and the part of the songs of the list in the playlist is displayed. The user can be provided with more satisfactory songs in a timely and fast manner, and the user search time is saved. The operational steps are simple and convenient, providing convenience for the user and improving the experience.

### BRIEF DESCRIPTION OF DRAWINGS

To describe the technical solutions more clearly in the embodiments of the present disclosure or related technologies, the following will briefly introduce the drawings needed in the embodiments or related technical descriptions. Apparently, the drawings in the following description are some embodiments of the present disclosure. For ordinary technicians in the art, they can also obtain other drawings from these drawings without paying creative efforts.
FIG. 1A is a schematic diagram of a scenario of a method of playlist recommendation provided by an embodiment of the present disclosure.
FIG. 1B is a schematic diagram of a scenario of a method of playlist recommendation provided by another embodiment of the present disclosure.
FIG. 2 is a schematic flowchart of a method of playlist recommendation provided by an embodiment of the present disclosure.
FIG. 3 is a schematic diagram of a scenario of a method of playlist recommendation provided by another embodiment of the present disclosure.
FIG. 4 is a schematic diagram of a scenario of a method of playlist recommendation provided by still another embodiment of the present disclosure.
FIG. 5 is a schematic diagram of a scenario of a method of playlist recommendation provided by another embodiment of the present disclosure.
FIG. 6 is a schematic diagram of a scenario of a method of playlist recommendation provided by still another embodiment of the present disclosure.
FIG. 7 is a schematic diagram of a scenario of a method of playlist recommendation provided by still another embodiment of the present disclosure.
FIG. 8 is a schematic diagram of a scenario of a method of playlist recommendation provided by still another embodiment of the present disclosure.
FIG. 9A is a schematic diagram of a scenario of a method of playlist recommendation provided by another embodiment of the present disclosure.
FIG. 9B is a schematic diagram of a scenario of a method of playlist recommendation provided by still another embodiment of the present disclosure.
FIG. 10 is a structural block diagram of an apparatus for playlist recommendation provided by the embodiments of the present disclosure.
FIG. 11 is a schematic diagram of a hardware structure of an electronic device provided by the embodiments of the present disclosure.

### DETAILED DESCRIPTION

The embodiments of the present disclosure will be described in more detail below with reference to the accompanying drawings. While certain embodiments of the present disclosure are shown in the drawings, it is to be understood that the present disclosure may be implemented in various forms and should not be construed as limited to the embodiments set forth herein, and vice versa. It should be understood that the drawings and embodiments of the present disclosure are for example purposes only and are not intended to limit the scope of the present disclosure.

It should be understood that the steps described in the method embodiments of the present disclosure may be performed in a different order and/or in parallel. Furthermore, the method embodiments may include additional steps and/or omit performing the illustrated steps. The scope of the present disclosure is not limited in this respect.

As used herein, the term "include" and its variants should be construed as open terms meaning "including, but not limited to". The term "based on" means "at least partially based on". The term "one embodiment" means "at least one embodiment". The term "another embodiment" means "at least one another embodiment". The terms "some embodiments" means "at least some embodiments". Related definitions of other terms will be given in the following descriptions.

It should be noted that the concepts of "first", "second" and the like mentioned in the present disclosure are used only to distinguish different apparatuses, modules or units but not to limit the order or interdependence of the functions performed by these apparatuses, modules or units.

It should be noted that the modifications of "a" and "a plurality" mentioned in the present disclosure are schematic rather than limiting, and it should be understood by those skilled in the art that unless otherwise explicitly stated in the context, they should be understood as "one or more".

The names of messages or information interacted between multiple devices or modules in the embodiments of the present disclosure are for illustrative purposes only and are not intended to limit the scope of such messages or information.

It is to be understood that, before applying the technical solutions disclosed in various embodiments of the present disclosure, the user should be informed of the type, scope of use, and use scenario of the personal information involved in the subject matter of the present disclosure in an appropriate manner in accordance with relevant laws and regulations, and user authorization should be obtained.

For example, in response to receiving an active request from the user, prompt information is sent to the user to explicitly inform the user that the requested operation would obtain and use the user's personal information. Therefore, according to the prompt information, the user may decide on his/her own whether to provide the personal information to the software or hardware, such as electronic devices, applications, servers, or storage medium that perform operations of the technical solutions of the present disclosure.

As an optional but non-limiting implementation, in response to receiving an active request from the user, the way of sending the prompt information to the user may, for example, include a pop-up window, and the prompt information may be presented in the form of text in the pop-up window. In addition, the pop-up window may also carry a select control for the user to choose to "agree" or "disagree" to provide the personal information to the electronic device.

It is to be understood that the above process of notifying and obtaining the user authorization is only illustrative and does not limit the implementations of the present disclosure. Other methods that satisfy relevant laws and regulations are also applicable to the implementations of the present disclosure.

In the prior art, only songs or playlists may be recommended, which has limitations. Moreover, the way of random recommendations is often not preferred by the user, and the recommended accuracy is low. The way of recommending songs through user search is preferred by users. However, every time the user listens to a song, they need to search the song library for one pass. Operational steps are tedious. The songs are searched from the massive song library in real time, resulting in a slow response speed and longer search time. Therefore, in the prior art, a satisfactory song cannot be quickly and accurately recommended to a user, and a satisfactory playlist cannot be recommended to the user. The operational steps are tedious, and the user experience is reduced.

In order to solve the above problems, the technical concept of the present disclosure is to save the search time of the user, thereby providing convenience for the user. The playlist of the preference associated with the song is recommended to the user while the song is recommended. The song is displayed on the same interface and played, and the part of the songs of the list in the playlist is displayed. The user can be provided with more satisfactory songs in a timely and fast manner. The operational steps are simple and convenient, and the user experience is improved.

In an actual application, an example in which a first interface (for example, a song recommendation interface) of a user provided by a certain application is taken as an example. A song (or song) or a music video (MV) of the song may be played on the first interface. The method of playlist recommendation is described in detail below by using a song as an example.

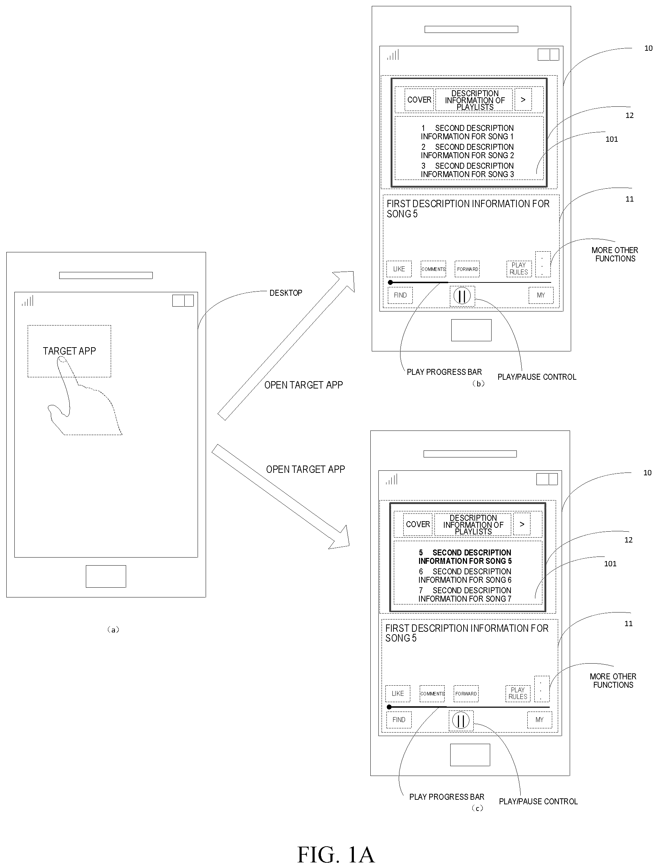

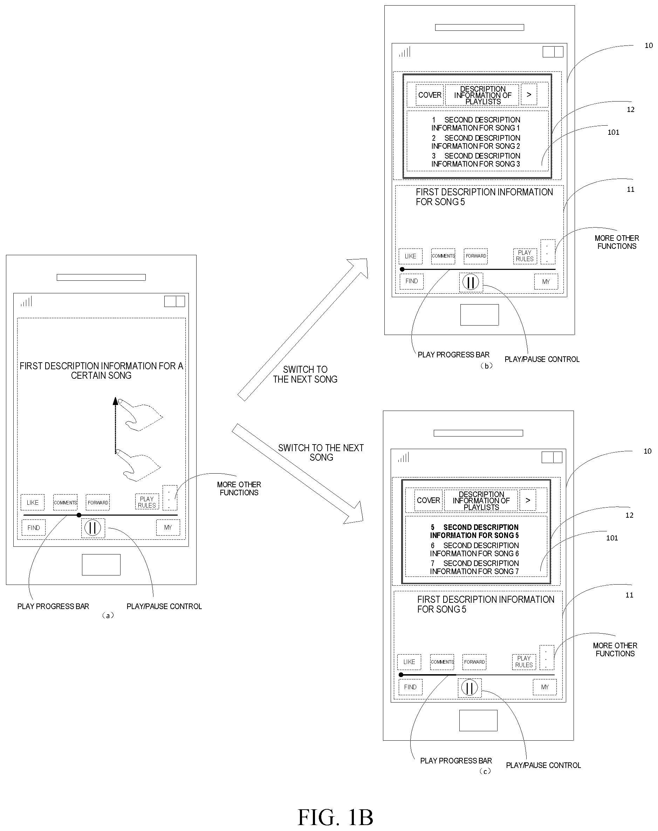

For example, in a scenario in which a user uses the application to enjoy (or listen to) a song or immerse the song. With reference to FIG. 1A and FIG. 1B, FIG. 1A is a schematic diagram of a method of playlist recommendation provided by an embodiment of the present disclosure, and FIG. 1B is a schematic diagram of a scenario of a method of playlist recommendation provided by another embodiment of the present disclosure. The user here may be a historical user or a new user. If the user is a historical user, it is possible to determine a song recommended for the user and a playlist associated with the song according to the preference of the user and/or the behavior of browsing or playing historical songs by the user. If the user is a new user, it is possible to determine the song recommended for the user and the playlist associated with the song according to the data such as the preference marked by the new user during registration. The following describes a method of playlist recommendation by taking a user (referred to herein as a target user, hereinafter referred to as a user) as a historical user as an example. It should be noted that the user's preference and behavior (such as historical play information, historical browsing information, etc.) have been approved by the user. For example, the user's preference for music genres, artists, etc. are clearly collected.

An execution body of the method of playlist recommendation may be a terminal device. The terminal device herein may implement an interaction operation with a user. For example, the terminal device may be configured with a touch screen, an induction screen, or the like, to perform contact interaction or inductive interaction with the user. Alternatively, the user may interact with the terminal device (an intelligent terminal such as a mobile phone, a tablet computer and a computer) by using another device (such as a mouse or touch pen), which is not specifically limited herein.

Specifically, the user enjoys or listens to or immerses the song through a target application (for example, the target application may play a song) loaded on the terminal device. The following may perform playlist recommendation through at least two scenarios.

In Scenario 11: open a target application (i.e., APP), as shown in FIG. 1A.

If the user starts the target APP (referring to (a) in FIG. 1A), the target song for recommending to the target user may be determined according to the preference of the user and/or the behavior of browsing or playing the historical songs. Meanwhile, all play lists collecting the target song are searched, and then at least one playlist to be recommended to the user is determined from all playlists according to the preference of the user and/or the behavior of browsing or playing the historical songs. Then, the target song is played on a first interface 10 of the user, and a first display area 11 on the first interface 10 is displayed with association information (for example, the first description information and the like, which may include: a song name, a singer, lyrics, and the like) of the target song. Meanwhile, association information (for example, description information of the playlist and the like, which may include: a song compilation cover, a title (for example, a song compilation name), and the like) of the target playlist is displayed in a second display area 12. For example, the association information may be a popular playlist (a compilation of theme songs for popular European and American movies in a certain year) that includes a "song 1" and a first list of play lists 101 corresponding to the target playlist. The first list of playlists 101 is displayed with a plurality of songs, and the plurality of songs displayed in the first playlist 10 may include the target song or may not include the target song. If the target song is not included, the first playlist 10 may be displayed with the first few songs (for example, song 1, song 2, and song 3), as shown in FIG. 1A (b). If the target song is included, the first playlist 10 may be displayed with the associated information (for example, a second description information and the like, which may include a name and singer of each of the plurality of songs and the like) of several songs in the order that the target song is the first song (with the target song being a song 5 as an example, the first playlist 10 may be displayed with the song 5, a song 6 and song 7), as shown in FIG. 1A (c).

In Scenario 12: switch to the next song, as shown in FIG. 1B.

If a song is currently played on an interface for the user, through a trigger operation acting on the first interface 10, such as an up-and-down swiping operation (referring to (a) in FIG. 1B), the next song is switched. The recommendation method for the next song may be that the target song to be recommended to the target user is determined by the user's preference and behavior of browsing or playing the historical songs. Meanwhile, all playlists collecting the target song are searched, and then at least one playlist to be recommended to the user is determined from all playlists according to the preference of the user and/or the behavior of browsing or playing the historical songs. Then, the target song is played on the first interface 10 of the user, and the first display area 11 on the first interface 10 is displayed with the association information (for example, the first description information and the like, which may include: a song name, a singer, lyrics, and the like) of the target song. Meanwhile, the association information (for example, description information of the playlist and the like, which may include: a song compilation cover, a title (for example, a song compilation name), and the like) of the target playlist is displayed in the second display area 12. For example, the association information may be a popular playlist (a compilation of theme songs for popular European and American movies in a certain year) that includes the "song 1" and the first list of play lists 101 corresponding to the target playlist. The first list of playlists 101 is displayed with a plurality of songs, and the plurality of songs displayed in the first playlist 10 may include the target song or may not include the target song. If the target song is not included, the first playlist 10 may be displayed with the first few songs (for example, song 1, song 2, and song 3), as shown in FIG. 1A (b). If the target song is included, the first playlist 10 may be displayed with the associated information (for example, the second description information and the like, which may include a name and singer of each of the plurality of songs and the like) of several songs in the order that the target song is the first song (with the target song being the song 5 as an example, the first playlist 10 may be displayed with the song 5, song 6 and song 7), as shown in FIG. 1A (c).

In addition, referring to FIG. 1A and FIG. 1B, the first interface 10 further includes a tab key for switching the interface, for example, by clicking a tab key "recommend" to switch to the first interface; by clicking a tab key "recently played" to switch to a "recently played" interface; by clicking a tab key "find" to switch to a "discovery" interface; by clicking a tab key "my" to switch to a "my" interface; and by clicking a tab key "play/pause" on the "discovery" interface or "my" interface to switch to the first interface 10. If the tab key "play/pause" is clicked on the first interface 10, the tab key "play/pause"is taken as a function key for playing/pausing. The first interface further includes a plurality of function controls, such as a function control "like", function control "comments", function control "forward", function control "play rules", and function control "more other functions". If the user likes which song, the function control "like" may be clicked to mark the song. The first interface further includes a play progress bar, and the progress of the currently played song may be known through the play progress bar. The functions of the play/pause control in FIG. 1A and FIG. 1B are all in a play function, that is, the song is in a play state, which is merely an example.

Here, the tab keys and function controls supporting the interface switching are not specifically limited herein.

The method of playlist recommendation provided by the embodiments of the present disclosure may be applied to a platform for providing music posting for users. The user may post, through the platform, the self-created music or the music which is authorized by other users to forward, or record and play songs sung by musicians. The songs sung by musicians are taken as an example. The target song for recommending to the target user and at least one playlist associated with the target song are determined first. The playlist of the preference associated with the song is recommended to the user while the song is recommended. The song is displayed on the same interface and played, and the part of the songs of the list in the playlist is displayed. The user can be provided with more satisfactory songs in a timely and fast manner, saving the user search time and providing convenience for the user and improving the experience.

The embodiments of the present disclosure do not specifically limit the scenario, and the following embodiments are all described in detail by taking a scenario for playing songs as an example.

In addition, it should be understood by those skilled in the art that a "trigger" operation may include, but is not limited to, a click trigger (that is, the user implements a trigger by clicking on the corresponding button or any position in the interface), a gesture trigger (the user implements a trigger operation by making the corresponding gesture), a voice trigger (that is, the user implements a trigger operation by uttering the corresponding voice instruction), an expression trigger (that is, a trigger operation is implemented by making the corresponding expression), a time trigger (that is, by timing, a trigger operation is implemented when the time arrives, and the like. The present disclosure does not limit the trigger operation, and the corresponding trigger logic may be configured according to the specific scenario, thereby implementing the trigger operation.

It should be noted that FIG. 1A and FIG. 1B are merely examples, the positions of the display layout of content such as the first interface or other interfaces on the screen are not specifically limited, and positions and proportions of the content of each part on the screen may be configured according to specific scenario requirements.

In addition, data of the user, such as preference information, behavior information, and the like, is obtained or analyzed after being authorized by the user, and have compliance, which will not be repeated herein.

The technical solutions of the present disclosure are described in detail below with reference to specific embodiments. The following several specific embodiments may be combined with each other, and the same or similar concepts or processes may not be repeated in some embodiments.

In an embodiment, an implementation of the method of playlist recommendation may be implemented in the following manner.

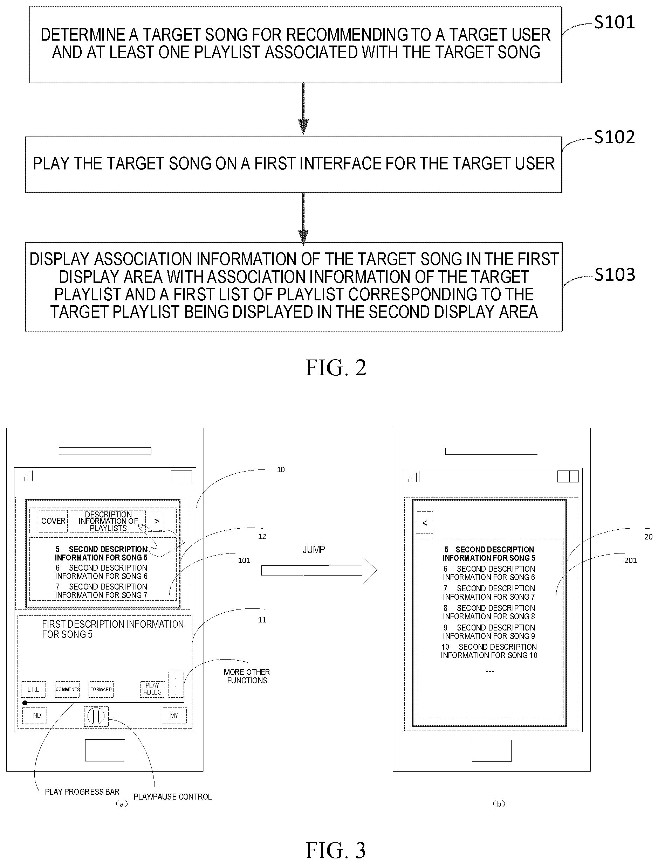

Referring to FIG. 2, which is a schematic flowchart of a method of playlist recommendation provided by the embodiments of the present disclosure. The method of playlist recommendation may include steps S101 to S103.

At S101: determine a target song for recommending to a target user and at least one playlist associated with the target song.

Each playlist in the at least one playlist includes the target song.

The method in the embodiments of the present disclosure may be applied to a terminal device. The first interface 10 (e.g., a recommendation interface) for playing a song may be displayed on the terminal device, as shown in FIG. 1A and FIG. 1B. In an actual application, the user plays a song by using a playing software (that is, a target application). For example, when the user listens to a popular song from Europe and America, the user may perceive a very good sound and expect to listen to more songs from Europe and America. In this scenario, songs or playlists from Europe and America that the user prefers are recommended to the user, and the user requirement can be met in time.

Specifically, when the user opens the playing software or when the currently played song is switched to the next song through the playing software, in order to meet the requirements of the user and improve the user experience, enable the user to quickly and accurately hear the song liked himself, and at the same time, the user does not need to carry out tedious searching operational steps, the song for recommending to the user can be determined through background analysis, such as the preference, the behavior and the like of the user. Meanwhile, in order to conveniently enable the user to select or listen in diversified or multi-aspect, the playlist for recommending to the user may be determined. The playlist is associated with the song to be recommended, and synchronous recommendation of the song and the playlist is implemented. Alternatively, the playlist associated with the song is recommended while the song is played. For example, the song is normally recommended, and if the song is in a certain playlist and a similarity (determing a score of a matching degree of the user preference and the playlist content) between the user's preference and/or behavior and the playlist is greater than x (numerical value), the playlist is recommended.

In an embodiment of the present disclosure, S101 is described in detail based on the foregoing embodiments. The determining the target song for recommending to the target user and the at least one playlist associated with the target song may be implemented by the following steps.

At Step a1: determine the target song for recommending to the target user.

At Step a2: obtain behavior information of browsing or playing historical songs of the target user and/or preference information of at least one song in the historical songs.

At Step a3: if the target song is recorded in the second predetermined number of playlists and it is determined that, based on the behavior information and/or the preference information, a preference degree of the target user for at least one playlist of the second predetermined number of playlists is greater than or equal to a predetermined threshold, determine to recommend the at least one playlist to the target user.

In the embodiments of the present disclosure, taking the target user as the historical user as an example, through behavior data that the user uses the playing software to play songs, such as the preference information, the behavior information of browsing or playing the historical songs, etc., which type of songs the user prefers is determined through big data analysis.

After the target song to be recommended is determined, it is searched for which playlists the target single is included in. If the target song is recorded in the third predetermined number of playlists, at least one playlist with a preference degree greater than or equal to a predetermined threshold is reserved. The at least one playlist is sorted according to the user preference and/or behavior. The priority of the at least one playlist is determined. The playlist with the highest priority is used as the target playlist for recommending to the user, and other play lists may be superimposed and displayed at the position of the target playlist.

In an embodiment of the present disclosure, Step a1 is described in detail. The determining the target song for recommending to the target user may be implemented by the following steps.

At Step a11: determine, based on the behavior information and/or the preference information, a plurality of songs to be played for recommending to the target user.

At Step a12, determine a target song currently recommended to the target user according to priorities of the plurality of songs to be played.

In the embodiments of the present disclosure, firstly, a plurality of songs to be played for recommendation to the user are obtained from the song library based on the behavior information and/or the preference information of the user. In order to improve the accuracy of the recommendation, the plurality of songs to be played can be sorted to obtain the priorities of the plurality of songs to be played, and the plurality of songs to be played are recommended to the user according to the priorities of the plurality of songs to be played. For example, a song with the highest priority is recommended to the user first, and when the user switches the song, a song with a higher priority is recommended to the user, and so on. Details are not described herein again. Herein, the sorting manner may be sorted according to a leaderboard of the songs or a weight mapped by the user's preference and/or behavior, which is not limited herein.

Alternatively, if the user actively searches or selects a song, the songs to be recommended may be sorted again according to the currently played song in combination with the priorities, then continue to be recommended, supporting real-time update recommendation, improving recommendation accuracy and user experience. And the tedious operational steps of the user are not needed.

At S102: play the target song on a first interface for the target user.

The first interface includes a first display area and a second display area, and the first display area and the second display area are distributed at different positions on the first interface.

In the embodiments of the present disclosure, after determining the song to be recommended, the song is actively played on the first interface 10. The song is played in the second display area 12 of the first interface 10, as shown in FIG. 1A and FIG. 1B.

At S103: display association information of the target song in the first display area with association information of the target playlist and a first list of play lists corresponding to the target playlist being displayed in the second display area.

The target playlist is any playlist of the at least one playlist.

In the embodiments of the present disclosure, since the recommended playlist is at least one. If the number of the play lists is one, the playlist is recommended as the target playlist and displayed in the first display area on the first interface 10. If the number of the play lists is plural, the plurality of playlists may be sorted according to the corresponding priorities, and the playlist with the highest current priority is taken as the target playlist and displayed in the first display area 11 on the first interface 10. Meanwhile, according to the sorting of the priorities, other playlists of the plurality of play lists are superimposed and displayed hidden below the target playlist, so that the screen space can be saved, and the user can conveniently switch the playlist.

According to the method of playlist recommendation provided by the embodiments of the present disclosure, the target song for recommending to the target user and at least one playlist associated with the target song are determined. The target song is played on the first interface for the target user. The first interface herein includes the first display area and second display area, and the first display area and second display area are distributed at different positions on the first interface. Then, the association information of the target song is displayed in the first display area with the association information of the target playlist and the first list of play lists 101 corresponding to the target playlist being displayed in the second display area. The first list of playlists 101 is displayed with the association information of the first predetermined number of songs. The target playlist is any playlist of the at least one playlist.

Therefore, in the embodiments of the present disclosure, at least one playlist to be recommended associated with the target song is determined while the target song to be recommended is determined. The playlist of the preference associated with the song is recommended while the song is recommended. The song is displayed on the same interface and played, and the part of the songs of the list in the playlist is displayed. The user can be provided with more satisfactory songs in time, the user search time is saved, the operational steps are simple and convenient, convenience is provided for the user, and meanwhile, the experience is improved.

In the embodiments of the present disclosure, on the basis of the foregoing embodiments, a method of playlist recommendation is described in detail. The method further includes: in response to a trigger operation acting on the target playlist, jumping to display a second interface, and continuing to cyclically play the target song on the second interface. The second interface is displayed with a second list of playlists, the second list of playlists is displayed with the second predetermined number of songs, and the second predetermined number is greater than the first predetermined number.

In the embodiments of the present disclosure, if the user does not perform any trigger operation, the song currently played on the first interface 10 may be played circularly. If the user wants to switch the song, the next song may be switched to by a trigger operation such as up and down swiping. If the user clicks a touch area for the target playlist, for example, a touch area where the associated information of the target playlist is located

(referring to (a) in FIG. 3), or the user clicks a function control provided for entering a details page of the playlist or makes a gesture, the second interface 20 may be jumped to (referring to (b) in FIG. 3), for example, a details page of the playlist. The second list of playlists 201 is displayed in the details page of the playlist, and the second list of playlists 201 is displayed with a plurality of songs. Since the second list of play lists may be displayed in full screen, the number of the songs displayed here may be more than the number of the songs displayed in the first list of playlists.

In response to jumping to the second interface 20, no other playlist is played automatically, and the corresponding song in the playlist continues to be played (e.g., the highlighted song shown in FIG. 3 (b)). Before the user triggers to play the songs of the second list of playlists 201, a song, that is, the target song, played in the first interface 10 before the jump may be played cyclically. The jump operation is displayed according to the position displayed in the list sequence, the position of the currently played song does not need to be positioned, and the complexity of logic processing is reduced. If the user clicks a function control representing "return", a physical key operation, and a return gesture, it is returned from the second interface 20 to the first interface 10.

In the embodiments of the present disclosure, on the basis of the foregoing embodiments, the method of playlist recommendation is described in detail. The method may further be implemented by the following steps: in response to a trigger operation acting on any song in the second list of playlists, playing songs in the second list of playlists starting from a currently triggered song sequentially and cyclically according to an arrangement order of the songs in the second list of playlists.

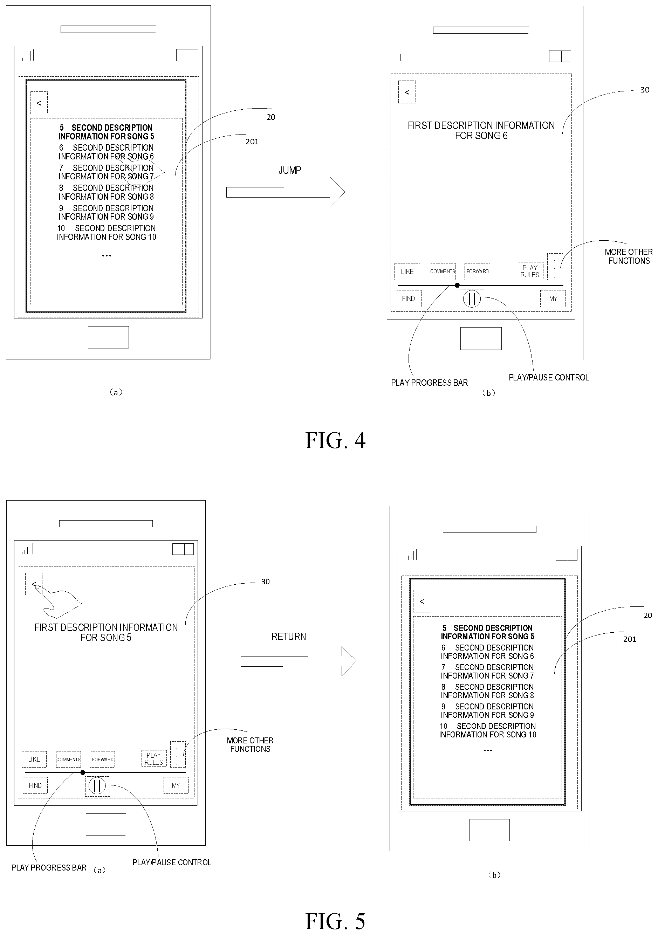

In the embodiments of the present disclosure, if the user enters the playlist and starts to play songs in the playlist, the songs of the playlist starts to be played sequentially. Specifically, in the second list of playlists 201 displayed on the second interface, the user may click any song in the second list of playlists 201. That is, the user starts to play the songs in the second single list 201 (referring to (a) in FIG. 4), a playing inner stream of the playlist is entered (for example, jumps to the details page 30 of the song), and starts to play the songs in the playlist (referring to (b) in FIG. 4). If the user does not have any other touch operations, the songs in the second list of playlists 201 are played cyclically and sequentially from the song.

In the details page of the songs in the play playlist, the user may return from the details page of the songs in the playing playlist to the second interface, that is, the details page of the playlist, by clicking the function control representing "return", the physical key operation, and the return gesture, as the following steps.

At Step b1: in response to a trigger operation indicating to return to the first interface, continue to cyclically play the target song or a song currently played in the second list of playlists with returning to the first interface.

At Step b2: if the target song continues to be played cyclically, pin the position of the target song in the first list of playlists to top, and sequentially display the target song and other songs in turn according to the arrangement order of songs in the first list of playlists.

At Step b3: if the currently played song in the second list of play lists continues to be cyclically played, pin a position of the song currently played in the second list of playlists in the first list of playlists to top, and sequentially display the song currently played and other songs in the first list of playlists in turn according to the arrangement order of the songs in the first list of playlists.

The details page of the playlist is returned from the details page 30 of the playlist, and which song continues to be played is related to whether the details page of the playlist enters the playlist inner stream.

For example, referring to FIG. 5, if the user returns from the details page 30 of the song to the second interface 20, the function control representing "return", the physical key operation, and the return gesture may be clicked. Taking the function control "return" as an example (referring to (a) in FIG. 5), the user returns from the details page 30 of the song to the second interface 20 (referring to (b) in FIG. 5). An example in which a song played by a details page of a song is a song 5 is used as an example.

If the target song is currently played, the target song continues to be played on the second interface when returning to the second interface 20. The target song is pinned to the top in the second list of playlists 201, and the other songs are sequentially displayed in a predetermined order in the second list of playlists (referring to (b) in FIG. 5).

If the currently played song is a song currently played in the second list of playlists 201, when returning to the second interface 20, the second interface 20 continues to play the song (for example, song 6). The target song is pinned to top in the second list of playlists 201, and the other songs are sequentially displayed in a predetermined order in the second list of play lists (referring to (b) in FIG. 5).

In an embodiment of the present disclosure, on the basis of the foregoing embodiments, a method of playlist recommendation is described in detail. The method may further be implemented by the following steps.

At Step c1: in response to a trigger operation indicating to return to the first interface, continue to cyclically play the target song or a song currently played in the second list of playlists with returning to the first interface.

At Step c2: if the target song continues to be played cyclically, pin the position of the target song in the first list of playlists to top, and sequentially display the target song and other songs in turn according to the arrangement order of songs in the first list of playlists.

At Step c3: if the currently played song in the second list of play lists continues to be cyclically played, pin a position of the song currently played in the second list of playlists in the first list of playlists to top, and sequentially display the song currently played and other songs in the first list of playlists in turn according to the arrangement order of the songs in the first list of playlists.

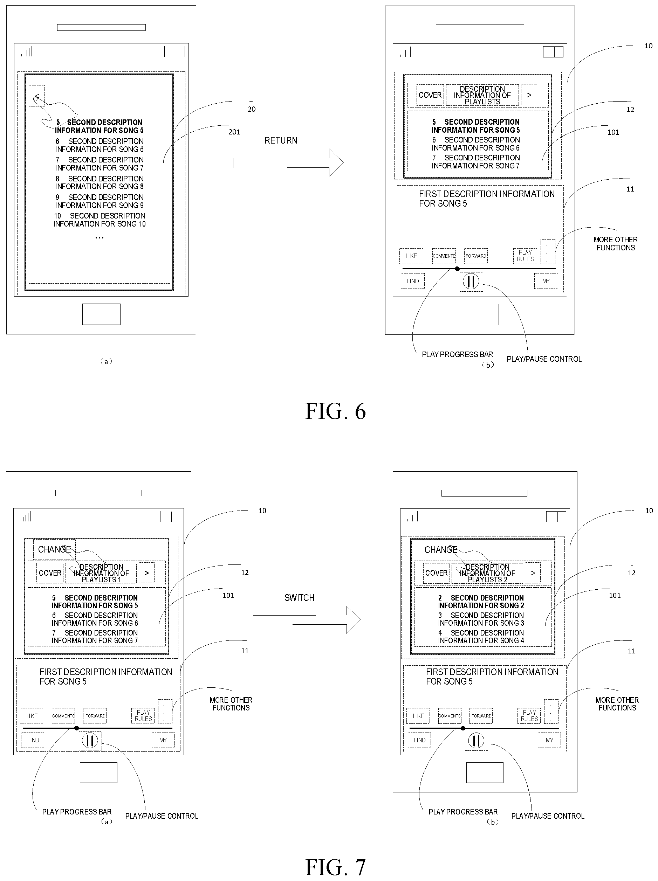

In the embodiments of the present disclosure, the recommended page is returned from the details page, and which song continues to be played is related to whether the details page enters the playlist inner stream. For example, as shown in FIG. 6, when the user returns from the second interface to the first interface, the function control representing "return", the physical key operation, and the return gesture may be clicked. Taking the function control "return" as an example (referring to (a) in FIG. 6), the user returns to the first interface from the second interface (referring to (b) in FIG. 6). An example in which a song played on the second interface is the song 5 is taken.

If the target song is played on the second interface, when returning to the first interface, the target song continues to be played on the first interface, and the target song is pinned to the top in the first list of playlists. Other songs are sequentially displayed according to a predetermined order in the first list of playlists (referring to (b) in FIG. 6).

If the second interface is played with a song currently played in the second list of play lists (the scenario may be that: when returning to the second interface (that is, the details page of the playlist), from the song inner stream (that is, the details page of the song) in the second list of playlists, the song previously played before switching is played on the playlist detail page), when returning to the first interface, the first interface continues to be played with the song (for example, the song 6), and the target song is pinned to top in the first list of playlists. Other songs are sequentially displayed according to the predetermined order in the first list of play lists (referring to (b) in FIG. 6).

In an embodiment of the present disclosure, on the basis of the foregoing embodiments, a method of playlist recommendation is described in detail. The method may further be implemented by the following steps.

At Step d1: if the number of the at least one playlist is plural, display superimposed association information of the at least one playlist in the second display area, and display a first control for switching playlists in the second display area.

At Step d2: if the target user triggers the first control, display a next playlist of the current playlist according to a superimposed order.

In the embodiments of the present disclosure, referring to FIG. 7, if the number of the at least one playlist is plural, association information of the at least one playlist may be displayed superimposed in the second display area on the first interface. For example, the association information of the target playlist is displayed on the outermost layer, and other playlists are superimposed and displayed below the target playlist. Here, the order of the superimposition may be placed according to the priorities of the playlists.

A first control may further be provided in the second display area, for example, a function control "change", or another key, to support the user in playlist switching. For example, if the user clicks on the function control "change" (as shown in FIG. 7 (a)), the currently displayed playlist (such as a playlist 1) is switched to the next playlist (for example, a playlist 2), as shown in FIG. 7 (b). Both the playlist 1 and the playlist 2 include the target song, for example, a song 5. The sequence positions of the song 5 in the playlist 1 and the playlist 2 of the first list of play lists may be different. The playlist 1 and the playlist 2 may include different songs.

Therefore, direct switching of the plurality of play lists containing the target song can be conveniently carried out, an additional jumpling interface is not needed, and the operation path of the user is saved.

In an embodiment of the present disclosure, on the basis of the foregoing embodiments, a method of playlist recommendation is described in detail. The method may further be implemented by the following steps.

At Step e1, in response to a first trigger operation acting on the first list of playlists, swipe playlists in the first list of playlists.

At Step e2: in response to a second trigger operation acting on any song in the first list of playlists, switch from the first list of playlists to a currently triggered song and play the currently triggered song.

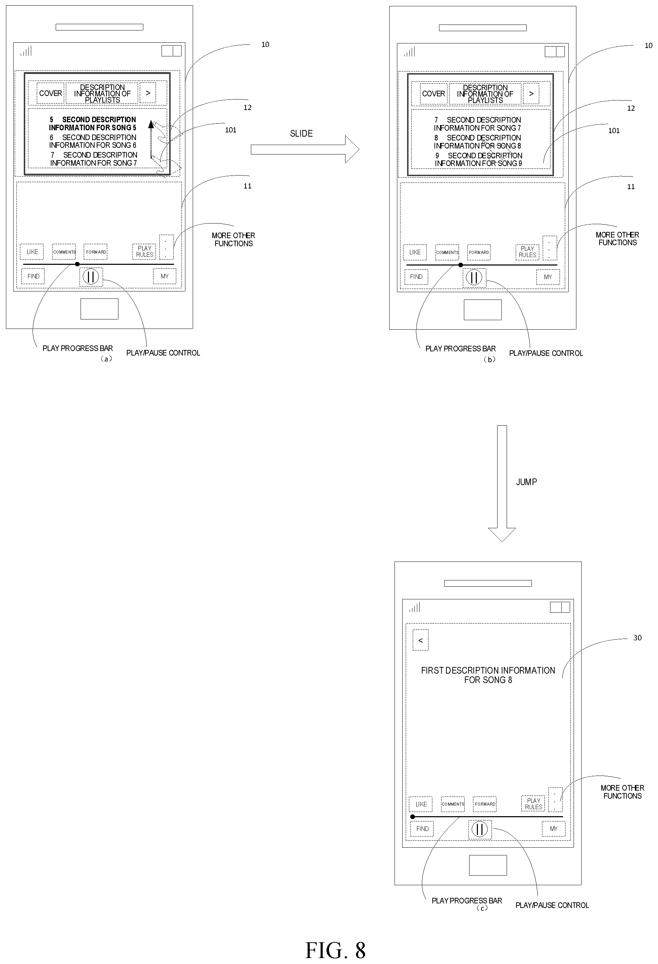

In the embodiments of the present disclosure, the swiping switching of the songs in the list of playlists is supported, and the switching of the songs in the list is supported. If the user performs the first trigger operation on the first list of playlists 101, such as swiping up and down, the songs in the first list of playlists 101 are displayed with the swiping, as shown in FIG. 8 (a). If the user performs the second trigger operation on a certain song in the first list of playlists 101, for example, a click operation (as shown in FIG. 8 (b)), the switching from the first interface 10 to the details page 30 of the song is made. That is, the first list of playlists 101 is switched to the currently triggered song (for example, the song 5 is played before the click operation, and the song 6 is played when the song 6 is clicked), as shown in FIG. 8 (c).

The song being played in the playlist needs to be displayed on top and appears in the first position. If the songs are the last two songs, the positions are at the last two positions.

In an embodiment of the present disclosure, on the basis of the foregoing embodiments, a method of playlist recommendation is described in detail. The method may further be implemented by the following steps.

At Step f1: in response to a third trigger operation acting in the second display area, swich, in the second display area, from the first list of play lists and the association information of the target playlist to a cover of the target song or a text of the target playlist.

At Step f2: upon switching to a next song by the target user, if a recommended playlist associated with the next song exists, display association information of the recommended playlist and a corresponding list of playlists in the second display area with the next song being played.

In the embodiments of the present disclosure, the switching of the content of the second display area on the first interface is supported. For example, the first list of playlists 101 is switched to the cover of the currently played song or the text of the playlist.

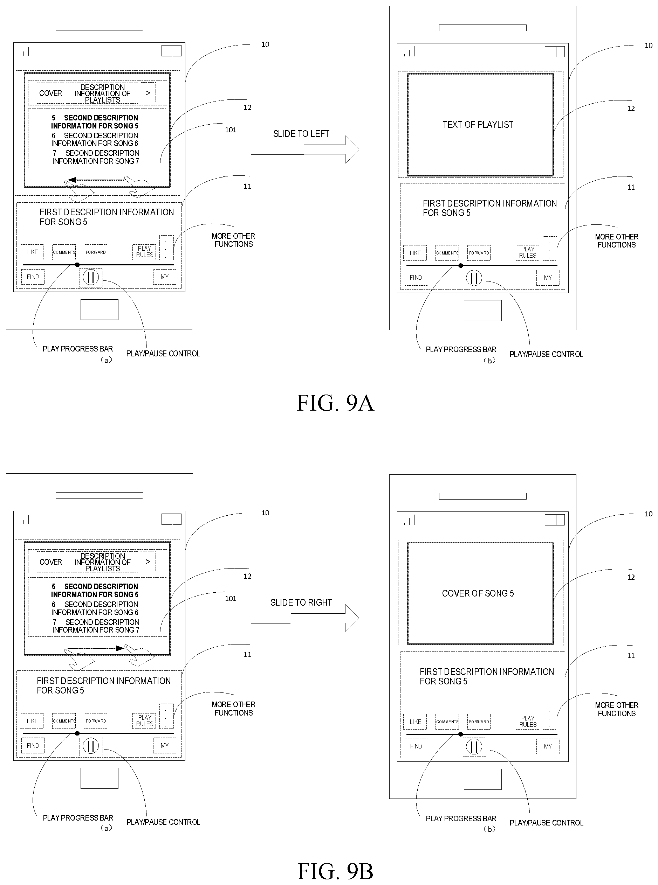

For example, referring to FIG. 9A and FIG. 9B, the user may switch by performing a third trigger operation, for example, a left or right swiping operation (as shown in FIG. 9A (a)), on the second display area. For example, if the third trigger operation is the left swiping operation (as shown in FIG. 9A (a)), the first list of playlists 101 is switched to display the text of the playlist (as shown in FIG. 9A (b)). If the third trigger operation is the right swiping operation (as shown in FIG. 9B (a)), the first list of playlists 101 is switched to display the cover of the song (as shown in FIG. 9B (b)).

If the user switches to the next song, for example, swiping down or playing control to adjust the song, and if the next song has an associated recommended playlist, the corresponding list of playlists and the association information of the recommended playlist are displayed in the second display area while playing the next song.

When switching to the next song, the recommended playlist highly matching the song is preferentially recommended.

If the user switches to the cover and then returns to the playlist again, the playlist is still displayed by default. That is, when switching, if the second display area before the switching is displayed with the cover or text of the song, the recommended playlist may be preferentially displayed for the user in the second display area after switching, to ensure the convenience of the user to select the song.

In addition, in order to improve the user experience, the content that has been displayed to the user is no longer recommended, and the overall logic is the same as that of the playlist recommendation in the "discovery" interface. The deduplication time may be that: the deduplication may be canceled after a week (the time may be set and changed appropriately according to a subsequent experience).

In an embodiment of the present disclosure, on the basis of the foregoing embodiments, a method of playlist recommendation is described in detail. The method may further be implemented by: in response to a trigger operation acting on a second control in the first interface, switching from the first interface to a cover of the target song or a text of the target playlist.

In the embodiments of the present disclosure, the second control here may be a control representing a return. If the user clicks on the second control, the first interface may be switched to the cover of the target song or the text of the target playlist, which is convenient for the user to operate.

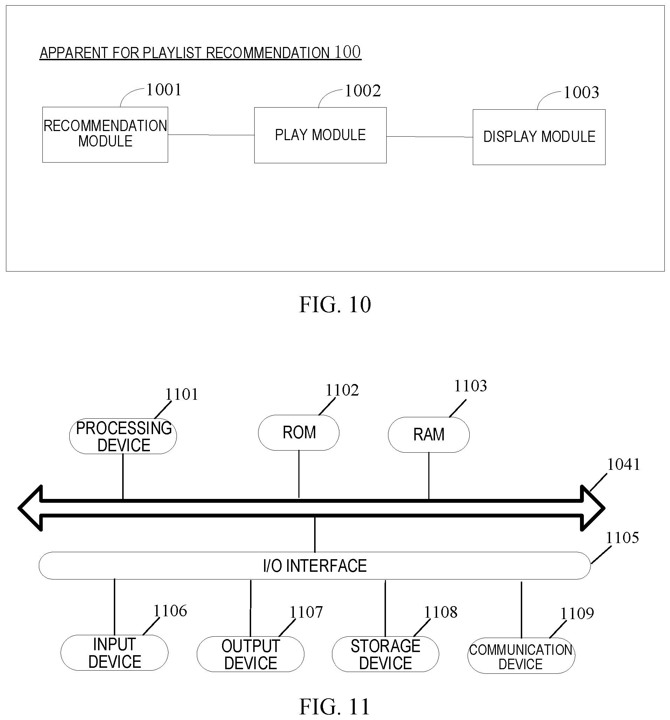

Corresponding to the method of playlist recommendation of the embodiments disclosed above, FIG. 10 is a structural block diagram of an apparatus for playlist recommendation provided by the embodiments of the present disclosure. The apparatus for playlist recommendation may be configured in the terminal device. For ease of illustration, only portions related to the embodiments of the present disclosure are shown. Referring to FIG. 10, the apparatus for playlist recommendation 100 may include a recommendation module 1001, a play module 1002, and a display module 1003.

The recommendation module 1001 is configured to determine a target song for recommending to a target user and at least one playlist associated with the target song.

The playing module 1002 is configured to play the target song on a first interface for the target user, wherein the first interface comprises a first display area and a second display area, and the first display area and the second display area are distributed at different positions on the first interface.

The display module 1003 is configured to display association information of the target song in the first display area with association information of the target playlist and a first list of play lists corresponding to the target playlist being displayed in the second display area, the first list of playlists being displayed with association information of the first predetermined number of songs.

The target playlist is any playlist of the at least one playlist.

The embodiments of the present disclosure provide the recommendation module 1001, the play module 1002, and the display module 1003. A target song for recommending to a target user and at least one playlist associated with the target song is determined. The target song is played on a first interface for the target user. The first interface herein includes a first display area and a second display area, and the first display area and the second display area are distributed at different positions on the first interface. Then, association information of the target song is displayed in the first display area, meanwhile, association information of the target playlist and a first list of playlists corresponding to the target playlist are displayed in the second display area. The first list of playlists is displayed with association information of the first predetermined number of songs. The target playlist is any playlist of the at least one playlist. Therefore, in the embodiments of the present disclosure, at least one playlist to be recommended associated with the target song is determined while at least one playlist to be recommended associated with the target song is determined. The playlist of the preference associated with the song is recommended to the user while the song is recommended. The song is displayed on the same interface and played, and the part of the songs of the list in the playlist is displayed. The user can be provided with more satisfactory songs in a timely and fast manner, and the user search time is saved. The operational steps are simple and convenient, providing convenience for the user and improving the experience.

The apparatus provided in the embodiments of the present disclosure may be configured to perform the technical solution of the method embodiments for playlist recommendation according to any of the first aspect, and implementation principles and technical effects thereof are similar. Details are not described herein again in the embodiments of the present disclosure.

In the embodiments of the present disclosure, the apparatus for playlist recommendation is described in detail based on the above disclosed embodiments of the embodiments of the present disclosure. The apparatus for playlist recommendation further includes a first interaction module, configured for: in response to a trigger operation acting on the target playlist, jumping to display a second interface, and continuing to cyclically play the target song on the second interface; wherein the second interface is displayed with a second list of playlists, the second list of playlists is displayed with the second predetermined number of songs, and the second predetermined number is greater than the first predetermined number.

In the embodiments of the present disclosure, the apparatus for playlist recommendation further includes a second interaction modul, configured for: in response to a trigger operation acting on any song in the second list of playlists, playing songs in the second list of playlists starting from a currently triggered song sequentially and cyclically according to an arrangement order of the songs in the second list of playlists.

In the embodiments of the present disclosure, the apparatus for playlist recommendation further includes a third interaction module, configured for: in response to a trigger operation indicating to return to the first interface, continuing to cyclically play the target song or a song currently played in the second list of play lists with returning to the first interface; in accordance with continuing to play cyclically the target song, pinning a position of the target song in the first list of playlists to top, and sequentially displaying the target song and other songs in turn according to the arrangement order of songs in the first list of playlists; in accordance with continuing to play cyclically the song currently played in the second list of playlists, pinning a position of the song currently played in the second list of play lists in the first list of playlists to top, and sequentially displaying the song currently played and other songs in the first list of playlists in turn according to the arrangement order of the songs in the first list of playlists.

In the embodiments of the present disclosure, the display module is further configured for: in accordance with that the number of the at least one playlist is plural, displaying superimposed association information of the at least one playlist in the second display area, and displaying a first control for switching play lists in the second display area; in accordance with that the target user triggers the first control, displaying a next playlist of the current playlist according to a superimposed order.

In the embodiments of the present disclosure, the apparatus for playlist recommendation further includes a fourth interaction module, configured for: in response to a first trigger operation acting on the first list of playlists, swiping play lists in the first list of playlists; in response to a second trigger operation acting on any song in the first list of playlists, switching from the first list of playlists to a currently triggered song, and playing the currently triggered song.

In the embodiments of the present disclosure, the apparatus for playlist recommendation further includes a fifth interaction module, configured for: in response to a third trigger operation acting in the second display area, swiching, in the second display area, from the first list of play lists and the association information of the target playlist to a cover of the target song or a text of the target playlist; upon switching to a next song by the target user, in accordance with that a recommended playlist associated with the next song exists, displaying association information of the recommended playlist and a corresponding list of playlists in the second display area with the next song being played.

In the embodiments of the present disclosure, the apparatus for playlist recommendation further includes a sixth interaction module, configured for: in response to a trigger operation acting on a second control in the first interface, switching from the first interface to a cover of the target song or a text of the target playlist.

In the embodiments of the present disclosure, the recommendation module is specifically configured for: determining the target song for recommending to the target user; obtaining behavior information of browsing or playing historical songs of the target user and/or preference information of at least one song in the historical songs; in accordance with that the target song is recorded in the third predetermined number of playlists and a determination that, based on the behavior information and/or the preference information, a preference degree of the target user for at least one playlist of the third predetermined number of playlists is greater than or equal to a predetermined threshold, determining to recommend the at least one playlist to the target user.

In the embodiments of the present disclosure, the recommendation module is specifically configured for: determining, based on the behavior information and/or the preference information, a plurality of songs to be played for recommending to the target user; determining a target song currently recommended to the target user according to priorities of the plurality of songs to be played.

The foregoing modules may be implemented as software components executing on one or more general purpose processors or may be implemented as hardware such as programmable logic devices and/or application specific integrated circuits that perform certain functions or combinations thereof. In some embodiments, the modules may be embodied in the form of a software product that may be stored in a non-volatile storage medium that may enable a computer device (e.g., a personal computer, a server, a network device, a mobile terminal, etc.) to implement the methods described in the embodiments of the present disclosure. In an embodiment, the foregoing modules may alternatively be implemented on a single device or may be distributed on multiple devices. Functions of these modules may be combined with each other or may be further split into multiple sub-modules.

Those skilled in the art may clearly understand that, for the convenience and brevity of description, the specific working process of the modules of the apparatus described above may refer to the corresponding process in the foregoing method embodiments, and details are not described herein again.

Based on the same inventive concept as the method, the embodiments of the present disclosure further provide an electronic device, including at least one processor and a memory. The memory stores computer executable instructions. The at least one processor executes the computer executable instructions stored in the memory, to enable the processor to perform the method according to the foregoing method embodiments.

With reference to FIG. 11, which illustrates a schematic structural diagram of an electronic device suitable for implementing the embodiments of the present disclosure, and the electronic device may be a terminal device. The electronic device includes a processor and a memory; the memory is configured to store a program for performing the method in the foregoing method embodiments; and the processor is configured to perform the program stored in the memory. The processor may include a central processing unit (CPU) or other form of processing unit having processing capability and/or instruction execution capability, and may control other components in the electronic device to perform desired functions. The memory may include one or more computer program products, which may include various forms of computer readable storage medium, such as a volatile memory and/or non-volatile memory. The volatile memory may include, for example, a random access memory (RAM) and/or a cache. The non-volatile memory may include, for example, a read only memory (ROM), a hard disk, a flash memory, or the like. One or more computer program instructions may be stored on the computer readable storage medium, and the processor may execute the program instructions to implement the functions of the embodiments of the present disclosure and/or other desired functions described above.

The terminal device may include but are not limited to mobile terminals such as mobile phones, laptops, digital broadcast receivers, personal digital assistants (PDA), portable Android devices (PAD), portable media players (PMP), car-mounted terminals (such as vehicle navigation terminals), wearable electronic device, and fixed terminals such as digital TV, desktop computers, etc. The electronic device shown in FIG. 11 is only an example and should not bring any limitation on the function and scope of use of the embodiments of the present disclosure.

As shown in FIG. 11, the electronic device may include a processing device (such as a central processing unit, graphics processing unit, etc.) 1101. The electronic device may perform various actions and processes based on programs stored in a read only memory (ROM) 1102 or loaded from storage device 1108 into a random access memory (RAM) 1103. In the RAM 1103, various programs and data necessary for the operation of the electronic device are also stored. The processing device 1101, ROM 1102, and RAM 1103 are connected to each other through a bus 1104. An input/output (I/O) interface 1105 is also connected to the bus 1104.

Typically, the following devices can be connected to the I/O interface 1105: an input device 1106 including, for example, touch screens, touchpads, keyboards, mice, cameras, microphones, accelerometers, gyroscopes, etc.; an output device 1107 including liquid crystal displays (LCDs), speakers, vibrators, etc.; a storage device 1108 including magnetic tapes, hard disks, etc.; and a communication device 1109. The communication device 1109 may allow the electronic device to communicate with other devices wirelessly or wirelessly to exchange data. Although FIG. 11 illustrates an electronic device with various devices, it should be understood that it is not required to implement or have all the devices shown. It can be implemented or equipped with more or fewer devices as an alternative.

In particular, according to the embodiments of the present disclosure, the process described above with reference to the flowchart can be implemented as a computer software program. For example, an embodiment of the present disclosure includes a computer program product, and the computer program product includes a computer program carried on a computer-readable medium, where the computer program includes program code for performing a method for recommending words. In such an embodiment, the computer program can be downloaded and installed from a network through the communication device 1109, or installed through the storage device 1108, or installed through the ROM 1102. When the computer program is executed by the processing device 1101, the above functions defined in the method of the embodiment of the present disclosure are performed.

It should be noted that the computer-readable medium described above can be a computer-readable signal medium or a computer-readable storage medium, or any combination thereof. The computer-readable storage medium can be, for example, but not limited to, an electrical, magnetic, optical, electromagnetic, infrared, or semiconductor system, apparatus, or device, or any combination thereof. The computer-readable storage media may include but are not limited to: an electrical connection with one or more wires, a portable computer disk, a hard disk, random access memory (RAM), read-only memory (ROM), an erasable programmable read only memory (EPROM or flash memory), an optical fiber, a portable compact disk read only memory (CD-ROM), an optical storage device, a magnetic storage device, or any combination thereof. In the present disclosure, a computer-readable storage medium may be any tangible medium containing or storing a program that can be used by an instruction execution system, apparatus, or device, or can be used in combination with an instruction execution system, apparatus, or device. In the present disclosure, a computer-readable signal medium can include a data signal propagated in baseband or as a carrier wave, the computer-readable signal medium carries computer-readable program code therein. Such propagated data signals may take many forms, including but not limited to electromagnetic signals, optical signals, or any combination thereof. A computer-readable signal medium may also be any computer-readable medium other than a computer-readable storage medium, which can send, propagate, or transmit programs for use by or in conjunction with instruction execution systems, apparatus, or devices. The program code contained on the computer-readable medium may be transmitted using any suitable medium, the medium includes but not limited to: wires, optical cables, RF (radio frequency), etc., or any combination thereof.

The computer readable medium may be included in the electronic device or may exist separately without being assembled into the electronic device.

The computer readable medium carries one or more programs. When the one or more programs are executed by an electronic device, the electronic device executes the method shown in the above embodiments.

Computer program codes for performing the operations of the present disclosure may be written in one or more programming languages or a combination thereof, including but not limited to Object Oriented programming languages - such as Java, Smalltalk, C++, and also conventional procedural programming languages - such as "C" or similar programming languages. The program code may be executed entirely on the user's computer, partially executed on the user's computer, executed as a standalone software package, partially executed on the user's computer and partially on a remote computer, or entirely on a remote computer or server. In the case of involving a remote computer, the remote computer may be any kind of network - including LAN or WAN - connected to the user's computer, or may be connected to an external computer (e.g., through an Internet service provider to connect via the Internet).

The flowcharts and block diagrams in the accompanying drawings illustrate the architecture, functions, and operations of possible implementations of the system, method, and computer program product of various embodiments of the present disclosure. Each block in a flowchart or block diagram may represent a module, program segment, or portion of code that contains one or more executable instructions for implementing a specified logical function. It should also be noted that in some alternative implementations, the functions marked in the blocks may occur in a different order than those marked in the drawings. For example, two consecutive blocks may actually be executed in parallel, or they may sometimes be executed in reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operations, or may be implemented using a combination of dedicated hardware and computer instructions.

The unit described in the embodiments of the present disclosure may be implemented by means of software or hardware. In some cases, the name of the module does not constitute a limitation on the module itself. For example, the editing module may further be described as "a module for starting the video editing page based on the selected first video".

The functions described herein above can be performed at least in part by one or more hardware logic components. For example, without limitation, example types of hardware logic components that may be used include: field programmable gate arrays (FPGAs), application specific integrated circuits (ASICs), application specific standard parts (ASSPs), system on chips (SOCs), complex programmable logic devices (CPLDs), and so on.

In the context of present disclosure, a machine-readable medium can be a tangible medium that may contain or store programs for use by or in conjunction with instruction execution systems, apparatuses, or devices. A machine-readable medium may be a machine-readable signal medium or a machine-readable storage medium. A machine-readable medium may include, but are not limited to, electronic, magnetic, optical, electromagnetic, infrared, or semiconductor systems, apparatuses, or devices, or any suitable combination thereof. Specific examples of the machine-readable storage medium may include electrical connections based on one or more wires, portable computer disks, hard disks, RAM, ROM, EPROM or flash memory, optical fibers, CD-ROM, optical storage devices, magnetic storage devices, or any combination thereof.

The embodiments of the present disclosure provide a computer readable storage medium having stored computer executable instructions that, when executed by a processor, implement the method according to the first aspect.

The embodiments of the present disclosure provide a computer program product including a computer program that, when executed by a processor, implements the method according to the first aspect.

The embodiments of the present disclosure provide a computer program which, when executed by a processor, implements the method according to the first aspect.

In a first aspect, the embodiments of the present disclosure provide a method of playlist recommendation including: determining a target song for recommending to a target user and at least one playlist associated with the target song; playing the target song on a first interface for the target user, wherein the first interface comprises a first display area and a second display area, and the first display area and the second display area are distributed at different positions on the first interface; displaying association information of the target song in the first display area with association information of the target playlist and a first list of playlists corresponding to the target playlist being displayed in the second display area, the first list of playlists being displayed with association information of the first predetermined number of songs. The target playlist is any playlist of the at least one playlist.

According to one or more embodiments of the present disclosure, the method further includes: in response to a trigger operation acting on the target playlist, jumping to display a second interface, and continuing to cyclically play the target song on the second interface; wherein the second interface is displayed with a second list of playlists, the second list of playlists is displayed with the second predetermined number of songs, and the second predetermined number is greater than the first predetermined number.

According to one or more embodiments of the present disclosure, the method further includes: in response to a trigger operation acting on any song in the second list of playlists, playing songs in the second list of playlists starting from a currently triggered song sequentially and cyclically according to an arrangement order of the songs in the second list of playlists.

According to one or more embodiments of the present disclosure, the method further includes: in response to a trigger operation indicating to return to the first interface, continuing to cyclically play the target song or a song currently played in the second list of play lists with returning to the first interface; in accordance with continuing to play cyclically the target song, pinning a position of the target song in the first list of playlists to top, and sequentially displaying the target song and other songs in turn according to the arrangement order of songs in the first list of playlists; in accordance with continuing to play cyclically the song currently played in the second list of playlists, pinning a position of the song currently played in the second list of play lists in the first list of playlists to top, and sequentially displaying the song currently played and other songs in the first list of play lists in turn according to the arrangement order of the songs in the first list of playlists.

According to one or more embodiments of the present disclosure, the method further includes: in accordance with that the number of the at least one playlist is plural, displaying superimposed association information of the at least one playlist in the second display area, and displaying a first control for switching play lists in the second display area; in accordance with that the target user triggers the first control, displaying a next playlist of the current playlist according to a superimposed order.

According to one or more embodiments of the present disclosure, the method further includes: in response to a first trigger operation acting on the first list of playlists, swiping playlists in the first list of playlists; in response to a second trigger operation acting on any song in the first list of playlists, switching from the first list of playlists to a currently triggered song, and playing the currently triggered song.

According to one or more embodiments of the present disclosure, the method further includes: in response to a third trigger operation acting in the second display area, swiching, in the second display area, from the first list of playlists and the association information of the target playlist to a cover of the target song or a text of the target playlist; upon switching to a next song by the target user, in accordance with that a recommended playlist associated with the next song exists, displaying association information of the recommended playlist and a corresponding list of playlists in the second display area with the next song being played.

According to one or more embodiments of the present disclosure, the method further includes: in response to a trigger operation acting on a second control in the first interface, switching from the first interface to a cover of the target song or a text of the target playlist.

According to one or more embodiments of the present disclosure, determining the target song for recommending to the target user and the at least one playlist associated with the target song includes: determining the target song for recommending to the target user; obtaining behavior information of browsing or playing historical songs of the target user and/or preference information of at least one song in the historical songs; in accordance with that the target song is recorded in the third predetermined number of playlists and a determination that, based on the behavior information and/or the preference information, a preference degree of the target user for at least one playlist of the third predetermined number of playlists is greater than or equal to a predetermined threshold, determining to recommend the at least one playlist to the target user.

According to one or more embodiments of the present disclosure, determining the target song for recommending to the target user includes: determining, based on the behavior information and/or the preference information, a plurality of songs to be played for recommending to the target user; determining a target song currently recommended to the target user according to priorities of the plurality of songs to be played.

In a second aspect, the embodiments of the present disclosure provide an apparatus for playlist recommendation including: a recommendation module configured to determine a target song for recommending to a target user and at least one playlist associated with the target song; a play module configured to play the target song on a first interface for the target user, wherein the first interface comprises a first display area and a second display area, and the first display area and the second display area are distributed at different positions on the first interface; a display module configured to display association information of the target song in the first display area with association information of the target playlist and a first list of play lists corresponding to the target playlist being displayed in the second display area, the first list of playlists being displayed with association information of the first predetermined number of songs. The target playlist is any playlist of the at least one playlist.

According to one or more embodiments of the present disclosure, the apparatus for playlist recommendation further includes a first interaction module configured for: in response to a trigger operation acting on the target playlist, jumping to display a second interface, and continuing to cyclically play the target song on the second interface; wherein the second interface is displayed with a second list of playlists, the second list of playlists is displayed with the second predetermined number of songs, and the second predetermined number is greater than the first predetermined number.

According to one or more embodiments of the present disclosure, the apparatus for playlist recommendation further includes a second interaction module configured for: in response to a trigger operation acting on any song in the second list of playlists, playing songs in the second list of play lists starting from a currently triggered song sequentially and cyclically according to an arrangement order of the songs in the second list of playlists.

According to one or more embodiments of the present disclosure, the apparatus for playlist recommendation further includes a third interaction module configured for: in response to a trigger operation indicating to return to the first interface, continuing to cyclically play the target song or a song currently played in the second list of playlists with returning to the first interface; in accordance with continuing to play cyclically the target song, pinning a position of the target song in the first list of playlists to top, and sequentially displaying the target song and other songs in turn according to the arrangement order of songs in the first list of playlists; in accordance with continuing to play cyclically the song currently played in the second list of playlists, pinning a position of the song currently played in the second list of playlists in the first list of playlists to top, and sequentially displaying the song currently played and other songs in the first list of play lists in turn according to the arrangement order of the songs in the first list of playlists.

According to one or more embodiments of the present disclosure, the display module is further configured for: in accordance with that the number of the at least one playlist is plural, displaying superimposed association information of the at least one playlist in the second display area, and displaying a first control for switching play lists in the second display area; in accordance with that the target user triggers the first control, displaying a next playlist of the current playlist according to a superimposed order.

According to one or more embodiments of the present disclosure, the apparatus for playlist recommendation further includes a fourth interaction module configured for: in response to a first trigger operation acting on the first list of playlists, swiping play lists in the first list of playlists; in response to a second trigger operation acting on any song in the first list of playlists, switching from the first list of playlists to a currently triggered song, and playing the currently triggered song.

According to one or more embodiments of the present disclosure, the apparatus for playlist recommendation further includes a fifth interaction module configured for: in response to a third trigger operation acting in the second display area, swiching, in the second display area, from the first list of playlists and the association information of the target playlist to a cover of the target song or a text of the target playlist; upon switching to a next song by the target user, in accordance with that a recommended playlist associated with the next song exists, displaying association information of the recommended playlist and a corresponding list of playlists in the second display area with the next song being played.

According to one or more embodiments of the present disclosure, the apparatus for playlist recommendation further includes a sixth interaction module configured for: in response to a trigger operation acting on a second control in the first interface, switching from the first interface to a cover of the target song or a text of the target playlist.

According to one or more embodiments of the present disclosure, the recommendation module is specifically configured for: determining the target song for recommending to the target user; obtaining behavior information of browsing or playing historical songs of the target user and/or preference information of at least one song in the historical songs; in accordance with that the target song is recorded in the third predetermined number of playlists and a determination that, based on the behavior information and/or the preference information, a preference degree of the target user for at least one playlist of the third predetermined number of play lists is greater than or equal to a predetermined threshold, determining to recommend the at least one playlist to the target user.

According to one or more embodiments of the present disclosure, the recommendation module is specifically configured for: determining, based on the behavior information and/or the preference information, a plurality of songs to be played for recommending to the target user; determining a target song currently recommended to the target user according to priorities of the plurality of songs to be played.

In a third aspect, the embodiments of the present disclosure provide an electronic device, including: at least one processor; and a memory. The memory stores computer executable instructions. The at least one processor executes the computer executable instructions stored in the memory, to enable the at least one processor to perform the method of playlist recommendation according to any of the first aspect.

In a fourth aspect, the embodiments of the present disclosure provide a computer readable storage medium having stored computer executable instructions that, when executed by a processor, implement the method of playlist recommendation according to any of the first aspect.

In a fifth aspect, the embodiments of the present disclosure provide a computer program product, including a computer program that, when executed by a processor, implements the method of playlist recommendation according to the first aspect.

In a sixth aspect, the embodiments of the present disclosure provide a computer program which, when executed by a processor, implements the method of playlist recommendation according to the first aspect.

The above description is only for the preferred embodiments of the present disclosure and an explanation of the technical principles used. Those skilled in the art should understand that the scope involved in the present disclosure is not limited to technical solutions formed by specific combinations of the foregoing technical features and should also cover other technical solutions formed by any combinations of the foregoing technical features or their equivalent features without departing from the disclosed concept. For example, a technical solution is formed by replacing the above features with (but not limited to) technical features with similar functions disclosed in the present disclosure.

Furthermore, although operations are depicted in a specific order, this should not be understood as requiring that these operations be performed in the specific order shown or performed in a sequential order. In certain environments, multitasking and parallel processing may be advantageous. Likewise, although several specific implementation details are included in the above discussion, these should not be interpreted as limitations on the scope of present disclosure. Certain features described in the context of individual embodiments may also be combined to be implemented in a single embodiment. On the contrary, various features described in the context of a single embodiment may also be implemented separately or in any suitable sub combination in multiple embodiments.

Although the present subject matter has been described in language specific to structural features and/or methodological logical actions, it should be understood that the subject matter defined in the attached claims may not necessarily be limited to the specific features or acts described above. On the contrary, the specific features and actions described above are only example forms of implementing the claims.

## Claims

1. A method of playlist recommendation comprising:
determining a target song for recommending to a target user and at least one playlist associated with the target song;
playing the target song on a first interface for the target user, wherein the first interface comprises a first display area and a second display area, and the first display area and the second display area are distributed at different positions on the first interface;
displaying association information of the target song in the first display area with association information of the target playlist and a first list of play lists corresponding to the target playlist being displayed in the second display area, the first list of playlists being displayed with association information of the first predetermined number of songs;
wherein the target playlist is any playlist of the at least one playlist.

2. The method of claim 1, wherein the method further comprises:
in response to a trigger operation acting on the target playlist, jumping to display a second interface, and continuing to cyclically play the target song on the second interface;
wherein the second interface is displayed with a second list of playlists, the second list of play lists is displayed with the second predetermined number of songs, and the second predetermined number is greater than the first predetermined number.

3. The method of claim 1 or 2, wherein the method further comprises:
in response to a trigger operation acting on any song in the second list of playlists, playing songs in the second list of playlists starting from a currently triggered song sequentially and cyclically according to an arrangement order of the songs in the second list of playlists.

4. The method of any of claims 1-3, wherein the method further comprises:
in response to a trigger operation indicating to return to the first interface, continuing to cyclically play the target song or a song currently played in the second list of play lists with returning to the first interface;
in accordance with continuing to play cyclically the target song, pinning a position of the target song in the first list of playlists to top, and sequentially displaying the target song and other songs in turn according to the arrangement order of songs in the first list of playlists;
in accordance with continuing to play cyclically the song currently played in the second list of playlists, pinning a position of the song currently played in the second list of play lists in the first list of playlists to top, and sequentially displaying the song currently played and other songs in the first list of play lists in turn according to the arrangement order of the songs in the first list of playlists.

5. The method of any of claims 1-4, wherein the method further comprises:
in accordance with that the number of the at least one playlist is plural, displaying superimposed association information of the at least one playlist in the second display area, and displaying a first control for switching playlists in the second display area;
in accordance with that the target user triggers the first control, displaying a next playlist of the current playlist according to a superimposed order.

6. The method of any of claims 1-5, wherein the method further comprises:
in response to a first trigger operation acting on the first list of playlists, swiping play lists in the first list of playlists;
in response to a second trigger operation acting on any song in the first list of playlists, switching from the first list of playlists to a currently triggered song, and playing the currently triggered song.

7. The method of any of claims 1-6, wherein the method further comprises:
in response to a third trigger operation acting in the second display area, swiching, in the second display area, from the first list of playlists and the association information of the target playlist to a cover of the target song or a text of the target play list;
upon switching to a next song by the target user, in accordance with that a recommended playlist associated with the next song exists, displaying association information of the recommended playlist and a corresponding list of playlists in the second display area with the next song being played.

8. The method of any of claims 5-7, wherein the method further comprises:
in response to a trigger operation acting on a second control in the first interface, switching from the first interface to a cover of the target song or a text of the target playlist.

9. The method of any of claims 1-8, wherein determining the target song for recommending to the target user and the at least one playlist associated with the target song comprises:
determining the target song for recommending to the target user;
obtaining behavior information of browsing or playing historical songs of the target user and/or preference information of at least one song in the historical songs;
in accordance with that the target song is recorded in the third predetermined number of playlists and a determination that, based on the behavior information and/or the preference information, a preference degree of the target user for at least one playlist of the third predetermined number of playlists is greater than or equal to a predetermined threshold, determining to recommend the at least one playlist to the target user.

10. The method of claim 9, wherein determining the target song for recommending to the target user comprises:
determining, based on the behavior information and/or the preference information, a plurality of songs to be played for recommending to the target user;
determining a target song currently recommended to the target user according to priorities of the plurality of songs to be played.

11. An apparatus for playlist recommendation comprising:
a recommendation module configured to determine a target song for recommending to a target user and at least one playlist associated with the target song;
a play module configured to play the target song on a first interface for the target user, wherein the first interface comprises a first display area and a second display area, and the first display area and the second display area are distributed at different positions on the first interface;
a display module configured to display association information of the target song in the first display area with association information of the target playlist and a first list of play lists corresponding to the target playlist being displayed in the second display area, the first list of play lists being displayed with association information of the first predetermined number of songs;
wherein the target playlist is any playlist of the at least one playlist.

12. An electronic device comprising:
at least one processor; and a memory;
the memory storing computer executable instructions;
the at least one processor executing the computer executable instructions stored in the memory, to enable the at least one processor to perform a method of playlist recommendation according to any of claims 1-10.

13. A computer readable storage medium having stored computer executable instructions that, when executed by a processor, implement a method of playlist recommendation according to any of claims 1-10.

14. A computer program product comprising a computer program that, when executed by a processor, implements a method of playlist recommendation according to any of claims 1-10.

15. A computer program which, when executed by a processor, implements a method of playlist recommendation according to any of claims 1-10.
